# EUROPÄISCHE PATENTSCHRIFT

(11) **EP 3 888 849 B1**
(45) Veröffentlichungstag und Bekanntmachung des Hinweises auf die Patenterteilung: **08.05.2024**
(21) Anmeldenummer: 21160421.0
(22) Anmeldetag: 03.03.2021
(51) Int. Cl.: B25B 13/48, B25F 1/02, B25G 1/00

(54) **WERKZEUG**
TOOL
OUTIL

(30) Priorität: 24.03.2020 AT 752020
(43) Veröffentlichungstag der Anmeldung: 06.10.2021
(73) Patentinhaber: Kulterer, Michael, 9624 Fritzendorf (AT)
(72) Erfinder: Kulterer, Michael, 9624 Fritzendorf (AT)
(74) Vertreter: Beer & Partner Patentanwälte KG

(56) Entgegenhaltungen:
- GB-A- 544 751
- US-A- 4 960 016
- US-A- 5 285 543
- US-A- 5 685 207
- US-A1- 2017 113 339
- US-A1- 2018 281 165

## Beschreibung

Die Erfindung betrifft eine Vorrichtung zum Festlegen eines Schwertes einer Motorsäge.

Wenn die Kette von Motorsägen geschärft werden soll, muss sie, damit das Schärfen mit Hilfe einer Feile ordnungsgemäß ausgeführt werden kann, fixiert werden. Hierzu ist es üblich, das Schwert in einer Klemmvorrichtung, die beispielsweise in einen Baumstumpf oder Baumstamm eingeschlagen wird, zu fixieren.

Zusätzlich gibt es für das Spannen der Kette einer Kettensäge ein Werkzeug mit einem Rohrschlüssel, der an einem Ende einen Sechskant für die Fixierungsmutter des Schwertes und am anderen Ende einen Sechskant für die Zündkerze des Motors der Motorsäge aufweist. Zusätzlich weist das bekannte Werkzeug einen Stab auf, der mit dem Rohrschlüssel verbunden ist und ein schraubendreherförmiges Ende aufweist. Mit diesem Werkzeug kann mit dem Stab das Spannen der Kette durch Bewegen des Schwertes mit Hilfe einer Stellschraube ausgeführt werden.

Nachteilig bei dem bekannten Werkzeug und der bekannten Halterung ist es, dass zwei gesonderte Teile vorgesehen sind, die insbesondere beim rauen Forstbetrieb unhandlich sind, zu Boden fallen und/oder verloren gehen können.

US 5,970,552 A betrifft einen Ratschenschlüssel, mit einer Nuss und einem als Schraubendreher ausgebildeten Griff. Die in die Nuss eingedrehte Schraube ist mit einem Kopf, der eine Hammerschlägen widerstehende Fläche aufweist, versehen. US 5,970,552 A erwähnt nicht, dass die Schraube einen anderen Zweck als den in US 5,970,552 A in Spalte 3, Zeilen 31 bis 48 erwähnten Zweck hat, nämlich den Ratschenschlüssel auch als Hammer verwenden zu können.

US 5,285,543 A offenbart ein Werkzeug mit einem Rohrschlüssel mit unterschiedlich großen Enden (Zündkerze und
Sägeblattbefestigungsschraube). Weiters ist bei US 5,285,543 A an dem Rohrschlüssel ein Stab mit schraubendreherartigem Ende befestigt. In dem hohlen Stab ist eine Feile aufgenommen, die an einem Ende ein Gewinde hat. Die Feile kann ein Gewinde, das in dem hohlen Stab in dessen dem Rohrschlüssel benachbarten Ende vorgesehen ist, eingeschraubt werden, wenn sie zum Schärfen einer Sägekette verwendet werden soll. Ein Hinweis, dass die Feile von US 5,285,543 A auch zum Festlegen des Schwertes einer Motorsäge verwendet werden kann, ist US 5,285,543 A nicht zu entnehmen.

Weder die Schraube von US 5,970,552 A noch die Feile von US 5,285,543 A ist so ausgebildet, dass sie zum Festlegen einer Kettensäge verwendet werden kann.

US 2017/0113339 A1 zeigt einen Schraubenschlüssel (wrench) mit an den Enden eines Stabes vorgesehenen Ansätzen, die in der Beschreibung von US 2017/0113339 A1 als "Zapfen" oder "Schraubendreher" bezeichnet werden. Ein Betätigungsstab ist in einem Sitz verschiebbar aufgenommen und kann mit einem Außengewinde in ein Innengewinde geschraubt werden, um die Gebrauchslage des Betätigungsstabes zu fixieren.

US 4,960,016 A zeigt ein multifunktionelles Autowerkzeug, das einen Stab mit schraubendrehartigem Ende umfasst. Ein Kopf an dem Stab kann in ein Ende des als Gehäuse ausgebildeten Griffes eingeschraubt werden.

Der Erfindung liegt die Aufgabe zugrunde, das bekannte Werkzeug so weiter zu bilden, dass es auch zum Festlegen des Schwertes einer Motorsäge verwendet werden kann.

Gelöst wird diese Aufgabe erfindungsgemäß mit einem Werkzeug, das die Merkmale von Anspruch 1 aufweist.

Bevorzugte und vorteilhafte Ausgestaltungen des erfindungsgemäßen Werkzeuges sind Gegenstand der Unteransprüche.

Da das erfindungsgemäße Werkzeug nicht nur zum Betätigen der Arretierungsschraube und zum Herausschrauben/Festschrauben der Zündkerze geeignet ist und auch den schraubendreherförmigen Stab für das Verstellen des Schwertes aufweist, sondern auch eine Einrichtung zum Festklemmen des Schwertes aufweist, sind zusätzliche Teile zum Festlegen des Schwertes einer Motorsäge entbehrlich.

In der Praxis kann das erfindungsgemäße Werkzeug durch Einschlagen seines Stabes mit dem schraubendreherförmigen Ende in einen Baumstamm/Baumstumpf festgelegt und dann das Schwert der Motorsäge mit Hilfe der Einrichtung an dem Werkzeug befestigt werden. So hat man beide Hände frei, um die Kette der Motorsäge beispielsweise mit einer Rundfeile zu schärfen.

Weitere Einzelheiten und Merkmale der Erfindung ergeben sich aus der nachstehenden Beschreibung bevorzugter Ausführungsbeispiele anhand der Zeichnungen. Es zeigt:
- Fig. 1: teilweise im Schnitt ein erfindungsgemäßes Werkzeug und
- Fig. 2: im Schnitt eine abgeänderte Ausführungsform des Werkzeuges von Fig. 1.

Ein erfindungsgemäßes Werkzeug 1 umfasst einen Rohrschlüssel 2, der an einem Ende einen Sechskant 3 für eine Zündkerze und an anderem Ende einen Sechskant 4 für eine Befestigungsmutter des Schwertes einer Motorsäge aufweist.

Quer zur Längserstreckung des Rohrschlüssels 2 ist mit diesem ein Stab 5 verbunden, der an seinem Ende 6 schraubendreherförmig ausgebildet ist.

Im Inneren des Rohrschlüssels 2, insbesondere in dessen Längsmitte, also in dem Bereich, in dem der Stab 5 mit dem Rohrschlüssel 2 verbunden ist, ist ein Einsatz 7 vorgesehen. Der Einsatz 7 ist mit dem Rohrschlüssel 2 beispielsweise durch Anschweißen oder Festkleben oder durch teilweises Verformen der Wand des Rohrschlüssels 2 fixiert.

Der Einsatz 7 weist ein Innengewinde 8 auf.

Das Werkzeug 1 umfasst weiters einen Gewindestab 9 mit einem Betätigungskopf 10. Der Gewindestab 9 kann in das Innengewinde 8 des Einsatzes 7 hineingedreht werden. Zusätzlich weist der Betätigungskopf 10 einen Ansatz 11 auf, der so dimensioniert ist, dass er in das Innere des Sechskantes 3 für die Zündkerze hineinpasst. Das erlaubt es, dass der Gewindestab 9 soweit in das Innengewinde 8 des Einsatzes 7 hineingeschraubt wird, dass der Betätigungskopf 11 an der Außenseite des Sechskantes 3 für die Zündkerze anliegt, sodass das Werkzeug 1 eine kompakte Außenform aufweist.

Wenn mit Hilfe des erfindungsgemäßen Werkzeuges 1 ein Schwert einer Motorsäge zu fixieren ist, wird der Stab 5 mit seinem schraubendreherartigen Ende 6 voran in einen Baumstamm oder Baumstumpf eingeschlagen, sodass das Werkzeug 1 festgelegt ist. Dann wird der Gewindestab 9 vom Werkzeug 1 gelöst (herausgeschraubt), durch ein im Schwert der Motorsäge vorgesehenes Loch gesteckt und soweit in den Einsatz 7 hineingeschraubt, dass der Ansatz 11 des Betätigungskopfes 10 das Schwert gegen ein äußeres Ende des Rohrschlüssels 2, insbesondere des Endes mit dem Sechskant 3 für die Zündkerze, drückt, sodass das Schwert durch Klemmen festgehalten ist.

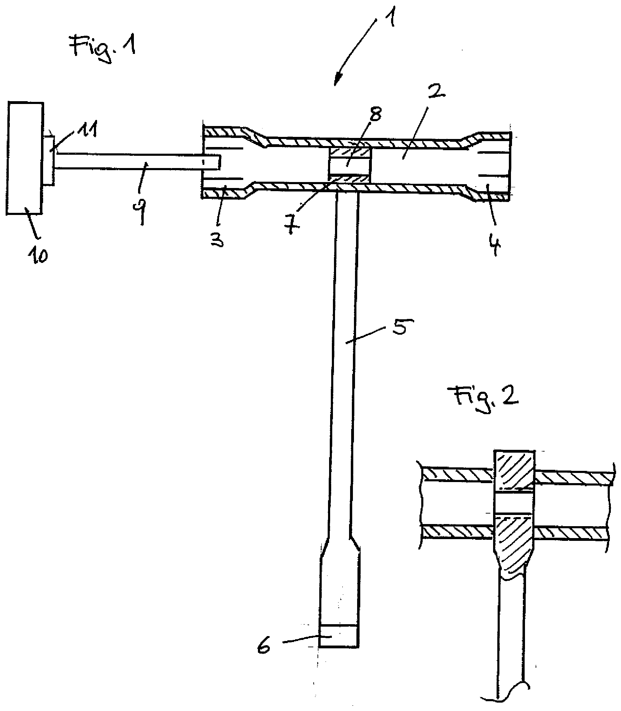

In der abgeänderten, in Fig. 2 gezeigten Ausführungsform ist der Stab 5 mit seinem dem Rohrschlüssel 2 zugeordneten Ende 12 verbreitert ausgebildet, bildet den Einsatz 7 und trägt das Innengewinde 8. Diese Ausführungsform hat den Vorteil, dass das Innengewinde 8 tragende Ende 12 des Stabes 5 den Rohrschlüssel 2 durchgreift und mit seinem Ende 12 über die Außenseite des Rohrschlüssels 2 übersteht. Der Einsatz 7 ist bei dieser Ausführungsform mit dem Stab 5 einstückig ausgebildet. Dies erlaubt es, den Stab 5 mit seinem schraubendreherförmigen Ende 6 in einen Baumstamm hineinzuschlagen, indem auf die Schlagfläche 13 an dem Ende 12 des Stabes 5 geschlagen wird.

Zusammenfassend kann ein Ausführungsbeispiel der Erfindung wie folgt beschrieben werden:
Ein Werkzeug 1 zum Fixieren des Schwertes einer Motorsäge umfasst einen Rohrschlüssel 2 und einen quer zum Rohrschlüssel 2 angeordneten Stab 5 mit einem schraubendreherförmigen Ende 6. Im Inneren des Rohrschlüssels 2 ist ein Einsatz 7 mit Innengewinde 8 vorgesehen. Zusätzlich umfasst das Werkzeug 1 einen Gewindestab 9 mit Betätigungskopf 10, der in das Innengewinde 8 des Einsatzes 7 hineingeschraubt werden kann. Zum Fixieren des Schwertes der Motorsäge wird der Gewindestab 9 durch ein Loch in dem Schwert der Motorsäge gesteckt und dann soweit in den Einsatz 7 hineingeschraubt, dass das Schwert der Motorsäge zwischen dem Betätigungskopf 10 und einem Ende des Rohrschlüssels 2 fixiert ist.

## Patentansprüche

1. Werkzeug zum Festlegen eines Schwertes einer Motorsäge, mit einem Rohrschlüssel (2) mit einem Sechskant (3) für eine Zündkerze und einem Sechskant (4) für eine Haltemutter für das Schwert der Motorsäge und mit einem Stab (5), der mit dem Rohrschlüssel (2) verbunden ist und der ein schraubendreherförmiges Ende (6) aufweist, **dadurch gekennzeichnet, dass** in dem Rohrschlüssel (2) ein mit Innengewinde (8) versehener Einsatz (7)festgelegt ist, dass im Inneren des Rohrschlüssels (2) ein in den Einsatz (7) einschraubbarer Gewindestab (9) mit Betätigungskopf (10) vorgesehen ist, und dass der Betätigungskopf (10) an seiner dem Gewindestab (9) zugewandten Seite einen Ansatz (11), der in das Innere des Sechskantes (3) für die Zündkerze passt, trägt.

2. Werkzeug nach Anspruch 1, **dadurch gekennzeichnet, dass** der Stab (5) mit dem Einsatz (7) einstückig ausgebildet ist.

3. Werkzeug nach Anspruch 2, **dadurch gekennzeichnet, dass** der Einsatz (7) auf der dem Stab (5) gegenüberliegenden Seite über den rohrförmigen Teil übersteht.

4. Werkzeug nach Anspruch 3, **dadurch gekennzeichnet, dass** das überstehende Ende (12) des Stabes (5) als Schlagfläche (13) ausgebildet ist.

5. Werkzeug nach einem der Ansprüche 1 bis 4, **dadurch gekennzeichnet, dass** der Stab (5) zur Achse des rohrförmigen Teils im rechten Winkel ausgerichtet ist.

6. Werkzeug nach einem der Ansprüche 1 bis 5, **dadurch gekennzeichnet, dass** der Einsatz (7) mit dem rohrförmigen Teil verbunden, insbesondere verschweißt, ist.

## Claims

1. Tool for fixing a blade of a chainsaw, with a pipe spanner (2) with a hexagon (3) for a spark plug and a hexagon (4) for a retaining nut for the blade of the chainsaw and with a rod (5) which is connected to the pipe spanner (2) and which has a screwdriver-shaped end (6), **characterized in that** an insert (7) provided with an internal thread (8) is fixed in the pipe wrench (2), **in that** an insert (7) provided with an internal thread (8) is fixed in the pipe spanner (2), **in that** a threaded rod (9) with an actuating head (10) which can be screwed into the insert (7) is provided in the interior of the pipe spanner (2), and **in that** the actuating head (10) carries on its side facing the threaded rod (9) an extension (11) which fits into the interior of the hexagonal edge (3) for the spark plug.

2. Tool according to claim 1, **characterized in that** the rod (5) is formed in one piece with the insert (7).

3. Tool according to claim 2, **characterized in that** the insert (7) projects beyond the tubular part on the side opposite the rod (5).

4. Tool according to claim 3, **characterized in that** the projecting end (12) of the rod (5) is designed as an impact surface (13).

5. Tool according to one of claims 1 to 4, **characterized in that** the rod (5) is aligned at right angles to the axis of the tubular part.

6. Tool according to one of claims 1 to 5, **characterized in that** the insert (7) is connected, in particular welded, to the tubular part.

## Revendications

1. Outil pour fixer un guide-chaîne d'une tronçonneuse, comprenant une clé tubulaire (2) avec un hexagone (3) pour une bougie d'allumage et un hexagone (4) pour un écrou de retenue pour le guide-chaîne de la tronçonneuse et une tige (5) qui est reliée à la clé tubulaire (2) et qui présente une extrémité en forme de tournevis (6), **caractérisé en ce qu'**un insert (7) pourvu d'un filetage intérieur (8) est fixé dans la clé tubulaire (2), **en ce qu'**il est prévu à l'intérieur de la clé tubulaire (2) une tige filetée (9) avec une tête d'actionnement (10) pouvant être vissée dans l'insert (7), et **en ce que** la tête d'actionnement (10) porte sur son côté tourné vers la tige filetée (9) un appendice (11) qui s'adapte à l'intérieur de l'hexagone (3) pour la bougie d'allumage.

2. Outil selon la revendication 1, **caractérisé en ce que** la tige (5) est formée d'une seule pièce avec l'insert (7).

3. Outil selon la revendication 2, **caractérisé en ce que** l'insert (7) dépasse de la partie tubulaire du côté opposé à la tige (5).

4. Outil selon la revendication 3, **caractérisé en ce que** l'extrémité en saillie (12) de la tige (5) est réalisée sous forme de surface de frappe (13).

5. Outil selon l'une des revendications 1 à 4, **caractérisé en ce que** la tige (5) est orientée à angle droit par rapport à l'axe de la partie tubulaire.

6. Outil selon l'une des revendications 1 à 5, **caractérisé en ce que** l'insert (7) est assemblé, notamment soudé, à la pièce tubulaire.
